# EUROPEAN PATENT APPLICATION

(11) **EP 2 767 796 A1**
(43) Date of publication of application: **20.08.2014**
(21) Application number: 14460002.0
(22) Date of filing: 27.01.2014
(51) Int. Cl.: G01B 7/02, G01D 5/14, G01N 27/82, G01B 7/06, G01B 7/16

(54) **Magnetic device to measure distance from ferromagnetic substrate**

(30) Priority: 27.01.2013 PL 40258413
(71) Applicant: Spinde Spólka z Ograniczona Odpowiedzialnóscia, 51-122 Wroclaw (PL)
(72) Inventor: NEF, Czes?aw, 10-123 Olsztyn (PL); Mokrzecki, Arkadiusz Bernard, 11-030 Purda (PL)

(57) **Abstract**

The subject of the invention is a magnetic device for measuring distance and displacement from a magnetic substrate.

The magnetic device equipped with a ring magnet and a sensor sensitive to magnetic field is characterized by that the ring magnet (1) and the sensor (2) sensitive to magnetic field are fixed to a bearing element (3) whereby the sensor (2), sensitive to magnetic field, is positioned in the vertical axis of the ring magnet (1), in the area of linear characteristics of magnetic induction versus the distance to the magnet (1), and the bearing element (3) is connected with the case (4) made of a ferromagnetic material, whereas between the case (4) and the ring magnet (1), fixed to the bearing element (3), there is a magnetic gap (5), whereby the second gap (7) and the ferromagnetic substrate (6) is between the case (4) and the ferromagnetic substrate (6). The sensor (2), sensitive to magnetic field is a Hall sensor. The bearing element (3) is made of a material with a thermal expansion coefficient below 12x10⁻⁶ m/mK, advantageously of a ceramic material. The magnetic gaps (5) and (7) are filled with a material with diamagnetic properties.

## Description

The subject of the invention is a magnetic device for measuring distance and displacement from a ferromagnetic substrate. The device can also be applied for measurement of magnetic material coatings on a ferromagnetic substrate, measurement of thickness of diamagnetic and paramagnetic materials on a ferromagnetic substrate as well as measurement of deflection and distortion in ferromagnetic substrates due to stress. The device can also be used as a proximity sensor or defectoscope for detection of defects in ferromagnetic materials e.g. bubbles, inclusions, cracks etc.

A magnetic sensor for displacement measurement, consisting of two ring magnets, positioned parallel to each other with the same poles, advantageously at a distance equal to the radius R, is known from the Polish patent application PL P.394282. The ring magnets are permanently seated inside a case, wherein the case is made of a material with a small coefficient of thermal expansion. In the space between the ring magnets there is a linear Hall sensor or other sensor suitable for measuring magnetic field strength.

A magnetic proximity sensor with tuning capability, consisting of a ringshaped permanent magnet with a tuning device in its inner aperture is known from the U.S. patent application No US 6703830. On the front surface of the ring magnet, a magnetic field sensor is permanently fixed. The tuning device is made of a ferromagnetic or diamagnetic material. In case of diamagnetic material, the tip of the adjusting screw is finished with a permanent magnet or ferromagnetic.

A magnetic sensor for measuring distance and thickness of coatings of diamagnetic and paramagnetic materials on a ferromagnetic substrate is known from the Polish patent application PL P.396780. The magnetic sensor consists of two ring magnets positioned parallel to each other with the same poles. The ring magnets are seated permanently in a case fixed to its inner face in the form of a cylinder made of metal with a narrow hysteresis loop, advantageously of soft magnetic steel. In a vertical axis inside the area between the ring magnets there is a linear Hall sensor or other sensor suitable for measuring magnetic field strength, which is also permanently fixed to the case.

According to the invention, the device for measuring distance and displacement from a magnetic substrate, equipped with a ring magnet and a sensor of magnetic field, advantageously Hall sensor, is characterized by that the ring magnet and the sensor of magnetic field, advantageously Hall sensor, are fixed to a bearing element made of a material with a thermal expansion coefficient below 12x10⁻⁶ m/mK, advantageously ceramic material, wherein the sensor of magnetic field is positioned in a vertical axis of the ring magnet in the area with a linear characteristics of magnetic induction versus the distance of the ring magnet.

The bearing element is connected with the case made of a ferromagnetic material. Between the case and the ring magnet fixed on the bearing element as well as between the case and the ferromagnetic substrate there are magnetic gaps.

In other version of the invention the gaps are filled with a material with diamagnetic properties, which creates an element distancing from the ferromagnetic substrate. The filling material in the magnetic gap, between the case and ferromagnetic substrate, protrudes beyond the horizontal line of the front face of the case.

According to the invention, an advantage of the magnetic device is its versatility and accuracy which make possible to possible to perform, in a simple way, a range of measurements, such as: distance and displacement of a tested material from a ferromagnetic substrate, thickness of any coatings of diamagnetic materials deposited on ferromagnetic substrates and distortion of ferromagnetic substrates.

The device is characterized by a simple design which makes possible to achieve accurate measurement results, below one micrometer. The use of a bearing element made of a material with low thermal expansion coefficient, below 12x10⁻⁶ m/mK, with a ring magnet and a sensor sensitive to magnetic field fixed on it, enables achieving high stability of temperature.

The case made of ferromagnetic material enables measurement of tested materials at the boundary of ferromagnetic material and additionally plays a role of a magnetic screen, ensuring high resistance to external interferences.

Unexpectedly, it occurred that the use of the distancing element between the case and the magnet as well as between the case and the ferromagnetic substrate resulted in improving the measurement accuracy.

Mutual positioning of the ring magnet and magnetic field sensor on the bearing element located inside the case made of ferromagnetic material, makes possible to obtain a linear output signal from the sensor of magnetic field due to the change in magnetic induction caused by the change of the distance from the ferromagnetic material.

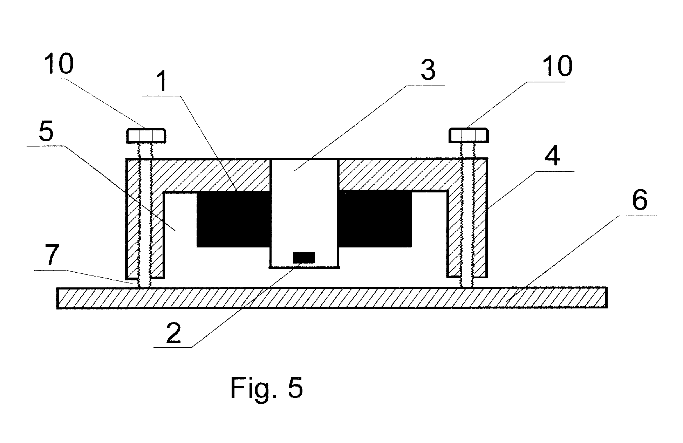

The subject of the invention is explained in detail on the examples of realization, where fig. 1 shows a cross section of the magnetic device, fig. 2 shows a plot of magnetic induction versus the distance in a vertical axis of the ring magnet, fig. 3 shows a plot of output voltage versus the distance from the ferromagnetic material, fig. 4 shows a vertical cross section of the magnetic device with distancing elements, fig. 5 displays a vertical cross section of the device for measuring distortion in ferromagnetic materials due to stress.

### Example 1

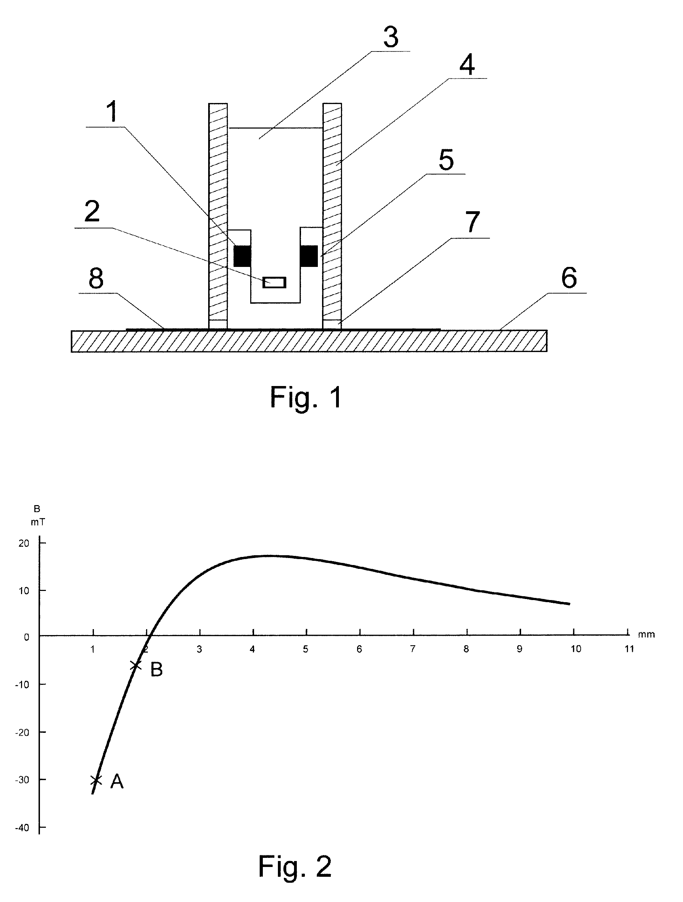

According to the first version of the invention shown in fig. 1, the magnetic device for measuring distance consists of a ring magnet 1 and a Hall sensor 2 sensitive to magnetic field, which are fixed to a bearing element 3. The bearing element 3 is made of a material with a thermal expansion coefficient of 6x10⁻⁶ m/mK. The Hall sensor 2 is situated in vertical axis of the ring magnet 1, in the area of linear characteristics of magnetic induction versus the distance from the magnet 1, corresponding to AB section, shown in fig. 2.

The extent and location of the area in relation to the ring magnet 1 depends on the size of the magnet 1, i.e. its inner and outer diameter, height and remanence. Tuning of the device is performed by adjusting mutual position of the ring magnet 1 and the Hall sensor 2 on the bearing element 3.

In order to reduce the measurement error on the boarders of a tested surface, a case 4 made of a ferromagnetic material, is employed. The case 4 plays also a role of a magnetic core. Between the case 4 and the ring magnet 1, fixed on the bearing element 3, there is a magnetic gap 5. Furthermore, between the case 4 and the ferromagnetic substrate 6 there is another magnetic gap 7, filled with a material with diamagnetic properties. The filling material in the magnetic gap 7 makes a distance to the ferromagnetic substrate 6 from the front side of the device, protruding beyond the horizontal line of the front surface of the case.

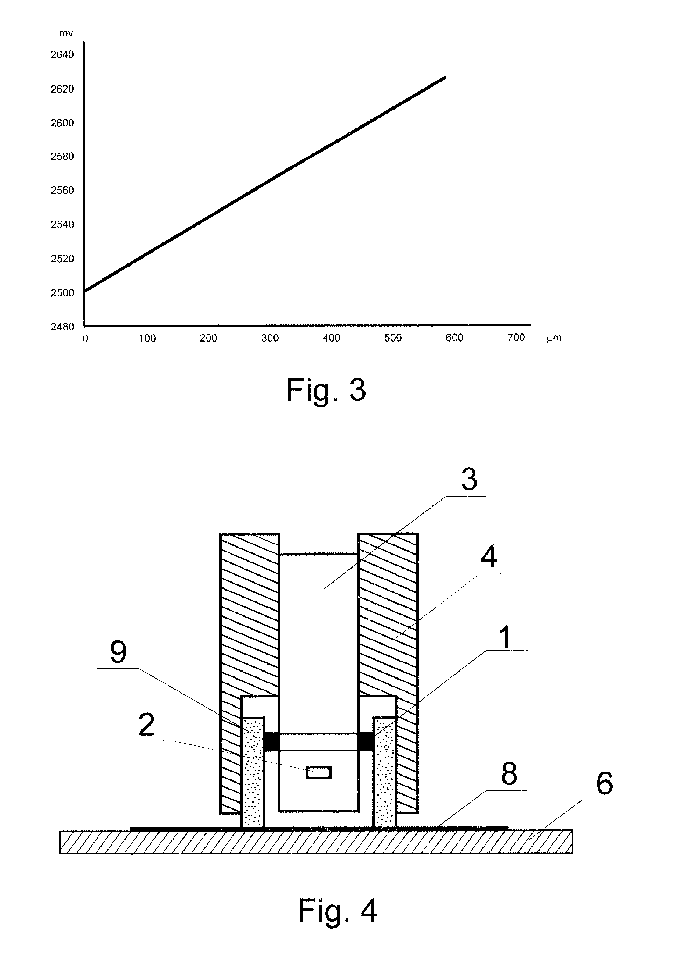

The measurement of a distance of the tested diamagnetic and paramagnetic materials 8 from the ferromagnetic substrate 6 is made by changing the distance between the ferromagnetic material and the front of the case 4 finished with the magnetic gap 7 filled with the material with diamagnetic properties, wherein the case 4 with the filling material plays a role of a magnetic core and a screen. Shortening and extending the distance results in a change in the value of magnetic induction of the ring magnet 1 in the range of its linear characteristics AB, presented in fig. 2, whereby the change determines the value of voltage signal from the Hall sensor 2, shown in fig. 3.

### Example 2

According to the second version of the invention shown in fig. 4, the magnetic device for measuring distance is similar to the one as in Example 1 and consists of a ring magnet 1 and a Hall sensor 2 sensitive to magnetic field, which are fixed to a bearing element 3. The bearing element 3 is made of a ceramic material. The Hall sensor 2 is situated in vertical axis of the ring magnet 1, in the area of linear characteristics of magnetic induction versus the distance from the magnet 1, corresponding to AB section, shown in fig. 2.

The extent and location of the area in relation to the ring magnet 1 depends on the size of the magnet 1, i.e. its inner and outer diameters, height and remanence. Tuning of the device is performed by adjusting mutual position of the ring magnet 1 and the Hall sensor 2 on the bearing element 3.

In order to reduce the measurement error on the boarders of a tested surface, a case 4 made of a ferromagnetic material, is employed. The case 4 plays also a role of a magnetic core. Between the case 4 and the ring magnet 1 fixed on the bearing element 3 there is a magnetic gap 5 and between the case 4 and the ferromagnetic substrate 6 there is another magnetic gap 7. In supporting elements there are screws 10 made of a material with diamagnetic properties, which make a distance from the ferromagnetic substrate 6, protruding beyond the line of the front face of the case 4.

The measurement of deflection of a tested ferromagnetic material, shortening and extending its distance from the front face of the device results in a change in magnetic induction of the ring magnet 1 in the area of its linear characteristics AB, presented in fig. 2, whereby the change determines the value of voltage signal from the Hall sensor 2, shown in fig. 3. The highest deflection is achieved in the middle part of the ferromagnetic substrate 6 relative to three-point supporting system with the screws 10.

## Claims

1. A magnetic device for measuring distance and displacement from a ferromagnetic substrate consisting of a ring magnet and a sensor sensitive to magnetic field, **characterized in that** the ring magnet (1) and a sensor (2) sensitive to magnetic field are fixed to a bearing element (3) whereby the sensor (2) sensitive to magnetic field is positioned in the vertical axis of the ring magnet (1) and the bearing element (3) is connected with a case (4) made of a ferromagnetic material, while between the case (4) and the ring magnet (1), fixed on the bearing element (3), there is a magnetic gap (5), whereby the second magnetic gap (7) is between the case (4) and the ferromagnetic substrate (6).

2. The magnetic device, as said in claim 1, **characterized in that** the sensor (2) sensitive to magnetic field is a Hall sensor.

3. The magnetic device, as said in claim 1, **characterized in that** the bearing element (3) is made of a material with a thermal expansion coefficient below 12x10⁻⁶ m/mK.

4. The magnetic device, as said in claim 1, **characterized in that** the bearing element (3) is made of a ceramic material.

5. The magnetic device, as said in claim 1, **characterized in that** the magnetic gaps (5) and (7) are filled with a material with diamagnetic properties.

6. The magnetic device, as said in claim 1, **characterized in that** in the magnetic gap (5) there are distancing elements (9) made of a material with diamagnetic properties.

7. The magnetic device, as said by claims 1, 5 and 6, **characterized in that** the distancing elements (9) and the filling material in the magnetic gaps (70 protrude beyond the horizontal line of front face of the case (4).
